Europäisches Patentamt

European Patent Office

Office européen des brevets

(11) Publication number: **0 287 135**
**A1**

## EUROPEAN PATENT APPLICATION

(21) Application number: **88200373.4**

(22) Date of filing: **29.02.88**

(51) Int. Cl.⁴: **B65G 17/16 , B65G 67/60**

(30) Priority: **17.03.87 NL 8700639**

(43) Date of publication of application:
**19.10.88 Bulletin 88/42**

(84) Designated Contracting States:
**AT BE CH DE ES FR GB GR IT LI LU NL SE**

(71) Applicant: **WEIMAR N.V.**
**16 Pietermaai P.O. Box 816**
**Willemstad Curaçao(AN)**

(72) Inventor: **Ammeraal, Thomas Cornelis Maria**
**Zandweg 115**
**NL-1531 AN Wormer(NL)**

(74) Representative: **de Vries, Johannes Hendrik**
**Fokke**
**Octrooibureau Los en Stigter B.V. P.O. Box**
**20052**
**NL-1000 HB Amsterdam(NL)**

(54) **Platform conveyor.**

(57) A Platform conveyor (1) comprises at least one pair of substantially parallel continuously driven endless chains (8) or the like guided around pairs of aligned guide disks (7). A number of platform carriers (9) is fixed to the pairs of chains in a spaced apart relationship. Platforms (10) are carried by the platform carriers, and the chains, in operation, guide the platforms in a substantially horizontal position from a loading area (12) to an unloading area (13) through a transport part (11) and back through a return part (14) by means of the platform carriers. The platforms are adapted to be uncoupled temporarily with respect to the chains in each loading and unloading area, whereby the platforms are permitted to be loaded and unloaded respectively in their uncoupled condition.

fig.1

## Platform conveyor

The invention relates to a platform conveyor comprising at least one pair of substantially parallel continuously driven endless chains or the like guided around pairs of aligned guide disks, a number of platform carriers fixed to the pairs of chains in a spaced apart relationship and platforms carried by the platform carriers, the chains, in operation, guiding the platforms in a substantially horizontal position from a loading area to an unloading area through a transport part and back through a return part by means of the platform carriers.

Such a divice, particularly for use in loading and unloading ships, is known from Dutch patent application 6400015. Herein the platforms consist of fork-shaped grates fixed to the chains by means of carrying trolleys. The loading and unloading areas are provided with grate means, onto which the goods to be loaded or unloaded can be put. The fork-shaped grates of the carrying trolleys are guided by the grate means at the loading and unloading areas such that the goods are transferred from the grate means to the fork-shaped grates or from the fork-shaped grates to the grate means respectively.

This is disadvantageously in that, in particular in the loading and unloading area at the side of the quay, the fork-shaped grates have to be guided along and under the grate means in a very complicated manner in order to permit the goods to be transferred.

The invention has the object to provide a platform conveyor of the kind mentioned in the preamble, wherein this disadvantage is removed in an effective way.

For this purpose the platform conveyor according to the invention is characterized in that the platforms are adapted to be uncoupled temporarily with respect to the chains in each loading and unloading area, whereby the platforms are permitted to be loaded and unloaded respectively in their uncoupled condition.

Consequently it is possible, notwithstanding the continuously circulating chains, to stop the platforms temporarily in the loading and unloading areas so that the platforms are permitted to be loaded or unloaded in a simple manner, whereafter they can be coupled again and can be carried away by the chains.

A preferred embodiment of the platform conveyor according to the invention is characterized in that the platforms are connected to the platform carriers in a detachable manner, and at least a number of platforms corresponding to the number of loading and unloading areas added to the number of platform carriers is provided, wherein the platform carriers are adapted to deliver a platform and to pick up a further platform in each loading and unloading area.

As a result the uncoupling of the platforms from the chains is carried out in an effective manner, and a platform is always present in each loading and unloading area for loading and unloading respectively of the goods.

Herein it is favourable when the chains comprise a substantially horizontal section in each loading and unloading area, the platform carriers being brought from the delivered platform to the platform to be picked up, upon passing through said section.

A very advantageous embodiment of the platform conveyor according to the invention is characterized in that the supporting surface of each platform is constructed as a conveyor for loading and unloading goods to and from the platform.

In this way it is possible to put on and remove all kinds of goods, such as goods piled up on standard pallets, one-way pallets, slip-sheets and the like, and piece goods such as big bags and drums, in a very safe manner onto and from the platforms.

It is preferred that in each loading and unloading area a driving means is able to engage the conveyor of the respective platform and to drive it for loading and unloading goods.

In this way it is not necessary to provide each conveyor of the platforms with its own driving means and it is sufficient to have one driving means in each loading and unloading area.

It is an advantage that in each loading and unloading area there is provided a conveying means extending from the delivery point for the platforms to the pick up point for the platforms and adapted to convey the platforms from the delivery point to the pick up point, wherein each conveying means comprises two conveyor belts extending parallel to the direction of movement of the platform carriers in situ and guided over driven rollers, the conveyor belts being able to support the platforms.

In a favourable embodiment of the platform conveyor according to the invention in each loading and unloading area there is provided at least one loading and unloading conveyor belt to which the platform delivered in the loading and unloading area is connectable, and it is preferred that each loading and unloading conveyor belt of the loading and unloading areas connect to the pick up point for the platforms.

It is advantageously to provide the platform conveyor according to the invention with a guiding means for the platform carriers in each loading and unloading area, the guiding means guiding the platform carriers at the lower side during their passage through the respective horizontal section.

As a result the platform carriers are prevented from canting by any regularity during their passage through the horizontal section in each loading and unloading area, in which case the platform carriers would be blocked.

The invention will hereafter be elucidated with reference to the drawing, which shows an embodiment of the platform conveyor according to the invention by way of example.

Fig. 1 is a schematical partially cut-away side view of the platform conveyor according to the invention, which is used for loading and/or unloading of a ship, which is illustrated in section.

Fig. 2 is an enlarged side view of a loading and unloading area of the platform conveyor of fig. 1.

Fig. 3 is a section along the line III-III in fig. 2, wherein the platform carrier is omitted for clarity purposes.

Fig. 4 is a section along the line IV-IV in fig. 3.

Fig. 5 shows, in a section along the line V-V in fig. 2, a detail of the connection between the platform and the platform carrier as well as of a cooperating driving for the platform carrier in the loading and/or unloading area.

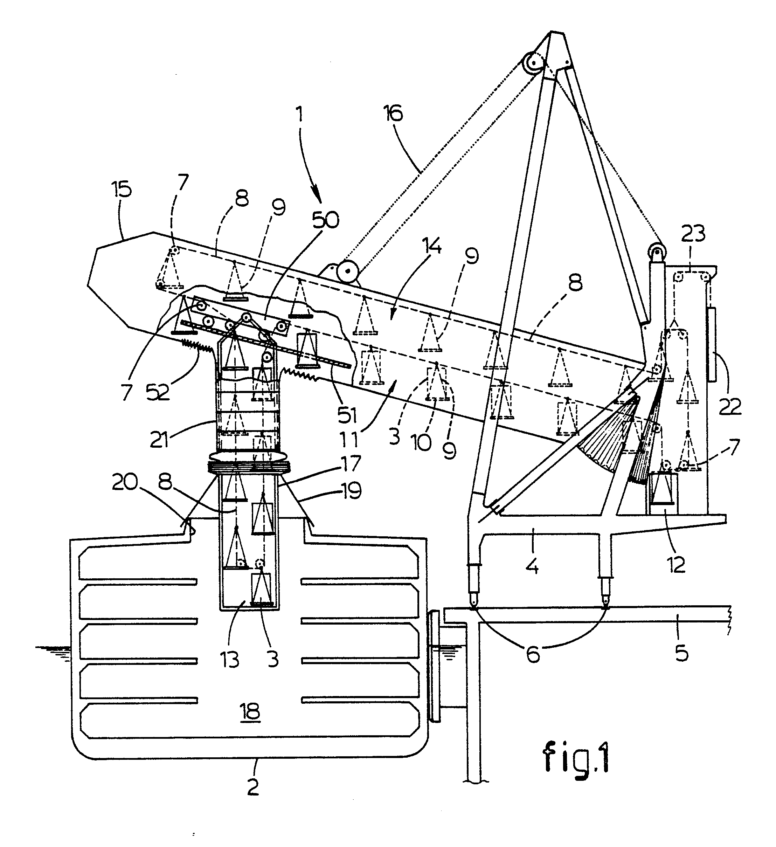

Fig. 1 shows an embodiment of a platform conveyor 1 used for loading and unloading goods into and out of a ship 2, in particularly for loading and unloading goods 3 piled up on pallets. Of course the platform conveyor is also suited for loading and unloading goods which are packed in another way, such as in big bags, drums etc. The platform conveyor 1 is provided with a crane underframe 4 which is movable along rails 6 on the quay 5.

The platform conveyor 1 comprises a pair of endless chains 8 extending parallel to each other around pairs of aligned guide disks 7. A plurality of platform carriers 9 are fastened to the chains 8 in an equally spaced relationship, the platform carriers 9 being able to carry platforms 10. In operation, the chains 8 circulate such that the platforms 10 are guided in a substantially horizontal position from a loading and/or unloading area 12 at the side of the quay through a transport part 11 to an unloading and/or loading area 13 in the ship 2 by means of the platform carriers 9 and are brought back through a return part 14. When a ship is being loaded the loading and/or unloading area 12 will serve as loading area, while the unloading and/or loading area 13 will be an unloading area. When a ship is being unloaded the situation will be just the other way round. The structure of the loading and unloading areas will be described hereafter in detail.

The main part of the section of the chains 8 is accommodated in a bridge 15 which is pivotably mounted to the crane underframe 4 and is pivotable by means of drivable cables 16 in order to adjust the height of the unloading and/or unloading area 13 at the side of the ship 2. This unloading and/or loading area 13 is provided in a well-shaped frame 17 which can be introduced into the hold 18 of the ship 2.

In order to convey the load to be loaded or unloaded from the loading area to the unloading area in a fully protected manner the platform conveyor 1 is completely encased. This is particularly important when cooled products are transported or when products are transhipped in an aggressive environment.

For this purpose the connection of the platform conveyor 1 to the ship takes place by means of an inverted tunnel-shaped adapter 19 adapted to be placed over the entrance 20 to the ship's hold 18 and is fixed to the lower side of a bellows-shaped extendable and retractable encasement of the well-shaped frame 17. As a result the encasement 21 of the well-shaped frame 17 is allowed to extend or retract when the bridge 15 is pivoted such that the connection to the entrance 20 of the ship's hold is maintained. Also when the ship 2 is moved in vertical direction with respect to the bridge 15 the connection of the encasement 21 to the entrance will be ensured by the retraction or extension thereof.

In order to adjust the loading and unloading area 13 also in the transverse direction of a ship the well-shaped frame 17 together with its encasement 21 is mounted longitudinally adjustable to the bridge 15. For this purpose the well-shaped frame 17 is pivotally suspended from a mobile carriage 50, which is movable along guide rails 51 extending in the longitudinal direction of the bridge 15. The mobile carriage 50 is adapted to be driven by a drive means (not shown) and to be locked in any position along the guide rails 51 which are mounted to the bridge 15. The encasement 21 of the well-shaped frame 17 joints to the encasement of the bridge in a way to allow a longitudinal movement of the well-shaped frame 17 with respect to the bridge and to maintain the fully protected transfer of the goods through the conveyor. This can be obtained by means of a bellows-shaped connection 52. The guide disks 7 which guide the chains 8 at the junction of the well-shaped frame 17 to the bridge 15 are mounted to the mobile carriage 50 and are displaced together with said carriage.

In order to tighten the chains 8, a counter-weight 22 engages the guide disks 7 that are freely movable in vertical direction through a chain 23, whereby said guide disks 7 are continuously loaded vertically upwardly.

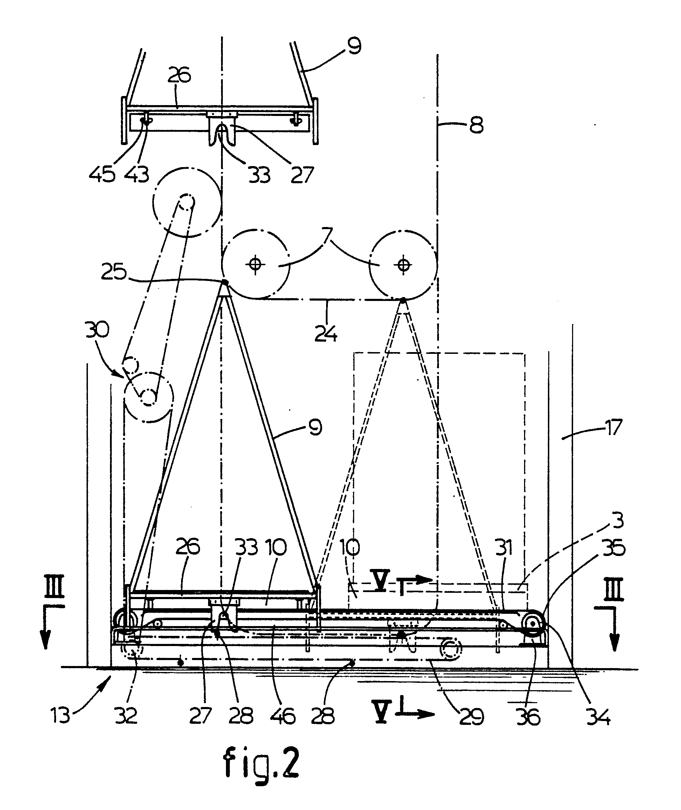

Fig. 2-4 show the loading and unloading area 13 at the side of the ship 2 in detail. Principally the loading and unloading area 12 and the loading and unloading area 13 are constructed in a similar way.

Fig. 2 illustrates the lower part of the path of one chain 8 passing around the guide disks 7 and extending through a short horizontal section 24 between them.

The platform carriers 9 are fastened to the chains 8 by means of pivot shafts 25 included in the chains 8. As a result the platform carriers are permitted to pivot freely about said pivot shafts 25. A longitudinal section 26 of the frame of the platform carrier 9 comprises a locking claw 27 being able to come into engagement with a transverse pin 28 fixed to a drivable auxiliary chain 29. This engagement is intended for drivably guiding the platform carriers 9 during their passage through the horizontal section 24. In this way the platform carriers 9 are prevented from canting during this movement, in which case the platform carriers could be blocked.

The movement of the auxiliary chain 29 is branched off from the chain 8 in such a way that the speed of circulation of the auxiliary chain 29 equals that of the chain 8 and both chains 8 en 29 are, therefore, synchronized. The branching off of the movement of the chain takes place by means of chain-sprocket transmissions 30 having a suitably adapted transmission ratio. The chain-sprocket transmissions 30 are in engagement with the chain 8 on one side and are drivably connected with a sprocket 32 of the auxiliary chain 29 on the other side. The transverse pins 28 on the auxiliary chain 29 are spaced apart about the circumference thereof in such a way that the locking claw 27 comes down on one of the transverse pins 28 when a new platform carrier 9 arrives in the loading and unloading area 13.

A recess 33 in the locking claws 27 cooperating with the transverse pin 28 is shaped such that the transverse pin 28 moves along the wall of this recess 33 to the bottom of the recess 33 when the platform 10 is descending, so that a guided and gradual engagement between the cooperating locking claw 27 and transverse pin 28 takes place. For this purpose the illustrated shape of the recess 33 is necessary because the horizontal component of velocity of the locking claw 27 of the platform carriers 9 increases during the transition of the vertical movement to the horizontal movement of the platform carrier 9. Only when the platform carrier 9 moves horizontal, that is parallel to the upper part of the auxiliary chain 29, the locking claw 27 and the transverse pin 28 move with the same speed and a fixed engagement is obtained.

The delivery of a platform 10 by the platform carrier 9 in the loading and unloading area 13 and the pick up of a next platform 10 in that area takes place in the period between the point of time when the pivot shaft 25 of the platform carrier 9 has just arrived at the circumference of the one guide disk 7 - the left one in fig. 2 - in its downward movement and the point of time when the pivot shaft 29 comes out of engagement with the other - right - guide disk 7 in its upward movement. Herein the vertical component of both quarter circular movements of the pivot shaft 29 upon the passage along the guide disks 7 is mainly utilized for uncoupling and coupling of the respective platforms 10 with respect to the platform carrier 9, while the platform carrier 9 is displaced from the delivered platform 10 to the platform 10 to be picked up during the passage through the horizontal section 24.

Upon the delivery of a platform 10 it is placed upon two parallel driven conveyor belts 35 guided over rollers 34 and supported by guide 31, the conveyor belts 35 engaging the lower side of the platform near the side edges thereof. The rollers 34 are journalled in supports 36 of the well-shaped frame 17.

After delivery of the platform 10 it can be conveyed from the delivery point to the pick up point by means of these conveyor belts 35, the platform 10 being picked up by a next platform carrier 9 at the pick up point. At this pick up point also the loading or unloading respectively of the platform 10 is carried out. For this purpose each platform itself is constructed as a conveyor belt 39 passed around rollers 38 journalled in a frame 37, the upper part of the conveyor belt 39 forming the supporting surface of the platform 10. The direction of movement of this supporting surface is perpendicular to the direction of movement of the platform carrier 9 in the platform conveyor 1.

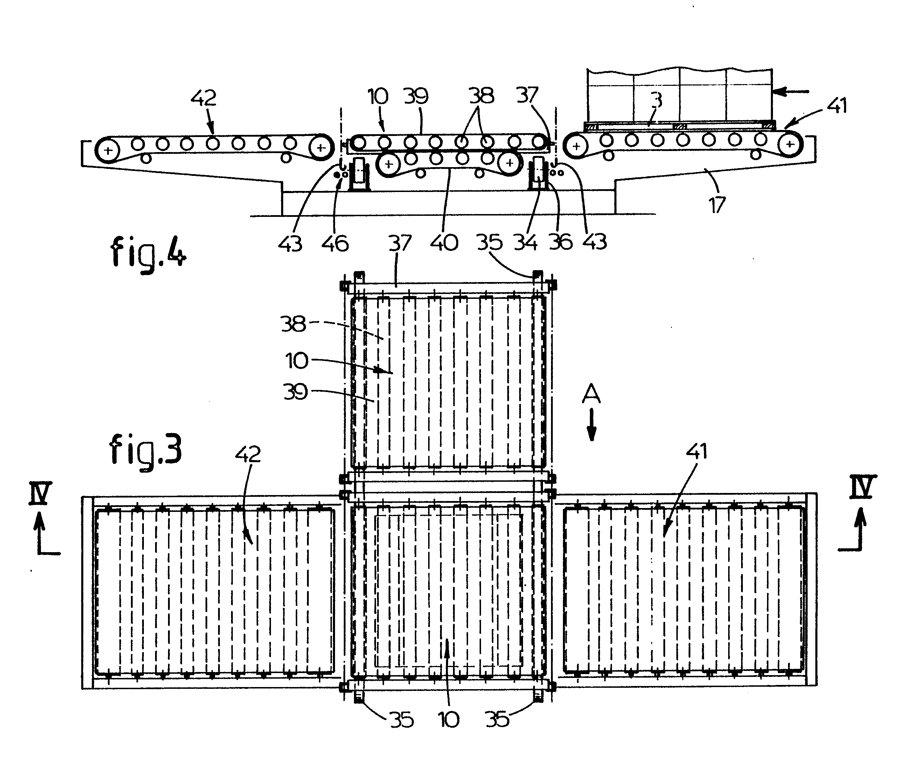

Each platform 10 does not have its own driving means for the respective conveyor belt 39. For the purpose of driving it there is provided on the frame 17 a drive belt 40 at the pick up point of each loading and unloading area 13, the drive belt 40 being adapted to engage the lower part of the conveyor belt 39 of each platform 10 and, therefore, to drive the conveyor belt 39 (fig. 4).

Upon said engagement the platform 10 is lifted up some distance, whereby the support surface of the conveyor belt 39 of the platform 10 is substantially flush with the support surfaces of driven conveyor belts 41 and 42 disposed at either side adjacent the platform 10 at the pick up point. The rollers of these conveyor belts 41 and 42 are journalled in the well-shaped frame 17 of the loading and unloading area 13.

For loading or unloading respectively of a pallet 3 onto or from respectively platform 10 the conveyor belt 39 of the platform 10 and at choice one of the conveyor belts 41 and 42 are driven synchronized and in the same sense. As a result the respective pallet 3, for example, will be transferred from one of the conveyor belts 41 and 42 onto the conveyor belt 39 when the platform 10 is being loaded. By providing two conveyor belts 11 and 12 in the loading and unloading area 13 a buffer is obtained, whereby a continous transport of pallets 3 is ensured. Of course it would also be possible to dispose the conveyor belt at either side adjacent the delivery point of the platforms 10.

In fig. 4, there is shown schematically at both sides of the platform a hook 43 forming part of the respective platform carrier 9 and taking care of the engagement between the platform carrier 9 and one of the platforms 10. It is noted that at each side of the platform carrier two hooks 43 are provided, one near the front and one near the back side.

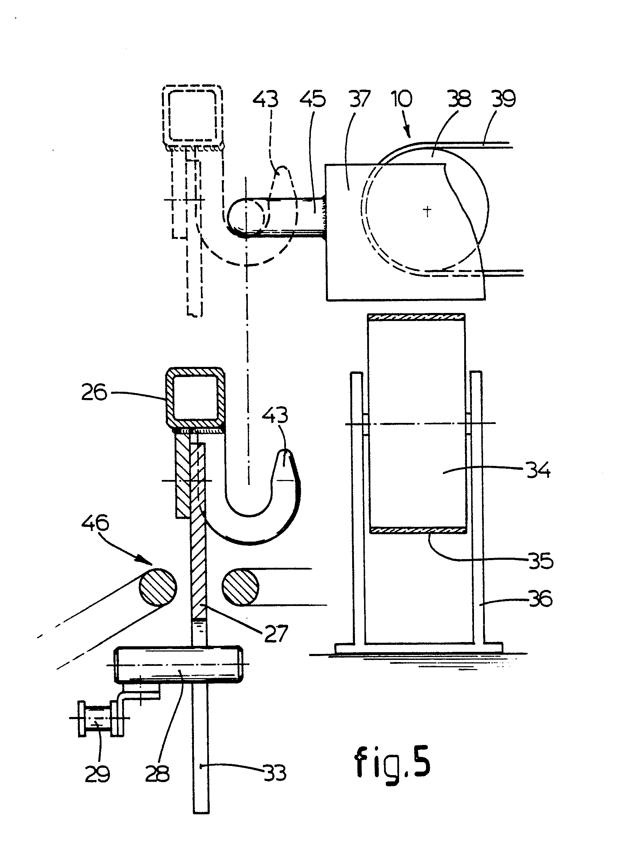

In fig. 5, said engagement is illustrated in a more detailed manner. The hook 43, already shown in fig. 4, is fixed to the longitudinal section 6 of the frame of the platform carrier 9. The hook 43 extends from this longitudinal section 26 inwardly with respect to the platform carrier 9. An eye 45 is provided on each platform 10 for the cooperation with each respective hook 43 of the platform carriers. Each hook 43 is able to engage the respective eye 45 from below and to lift up and support the platform 10 in this way (see the position of the hook 43 in fig. 5 illustrated in dashed lines). This is taking place when the platform 10 is picked up.

On the other side it is possible that when the platform 10 is put onto the conveyor belts 35 the hook 43 comes out of engagement with the eye 45 upon the further descendance of the platform carrier 9 after the platform 10 has been put down, whereby the platform 10 and the platform carrier 9 are completely separated. Hereafter the platform carrier 9 can be conveyed further on, while the platform 10 which has been put down remains in its place.

In fig. 5 there is further shown in detail the driving engagement between the auxiliary chain 29 and the platform carrier 9. It can be seen that the transverse pin 28 is mounted to the auxiliary chain 29 and extends inwardly. The locking claw 27 being in engagement with the transverse pin 28 is fastened to the longitudinal section 26 of the platform carrier 9 like the hook 43. A guide 46 provides the transverse guiding of the hook 27 and therefore of the platform carrier 10 during the horizontal displacement thereof. The guide 46 forms part of the well-shaped frame 17.

The operation of the platform conveyor and in particular of the loading and unloading area 13 thereof will now be elucidated with reference to fig.

2, 3 and 4 wherein a pallet 3 is put on a platform 10 in the loading area.

A platform carrier 9 having an empty platform 10 thereon comes from the left upper side downwards suspended from the chain 8, as seen in fig. 2. When the pivot shaft 25 arrives at the circumference of the guide disk 7 the platform 10 just comes into contact with the conveyor belts 35 of the loading area 13. Upon the further displacement of the pivot shaft 2 of the platform carrier 9 around the guide disk 7 the platform carrier 9 comes out of engagement with the platform 10. The locking claw 27 of the platform carrier 9 comes gradually into engagement with one of the transverse pins 28 of the circulating auxiliary chain 27.

The platform carrier 9 then moves horizontally away leaving the platform at the beginning of the conveyor belts 35.

At the end of the conveyor belts 35 a platform 10 loaded with a pallet 3 is standing in readiness. The arriving platform carrier 9 moves under this platform 10 in readiness and comes into engagement with the platform 10 at the end of the transition from the horizontal to the vertical movement thereof, whereupon this platform 10 is lifted up and is carried along.

As soon as this loaded platform 10 is displaced a sufficient distance upwardly .the drive of the conveyor belts 35 is started, whereby the platform 10 delivered by the platform carrier 9 is moved to the opposite end of said conveyor belts 35. As soon as the platform 10 has arrived between both conveyor belts 41 and 42 (see fig. 3) the drive of the conveyor belt 35 is stopped. Thereupon the drive belt 40 is brought into engagement with the conveyor belt 39 of the platform 10. As a result the supporting surface of the platform 10 moves in a direction facing away from the conveyor belt 41 that is loaded with a pallet.

The conveyor belt 41 loaded with the pallet is then also driven such that this pallet 3 moves to the platform 10. The pallet is thereby transferred from the conveyor belt 41 to the platform 10. When the pallet has arrived at the right place on the platform 10 the driving of the conveyor belt 39 is stopped and the platform 10 stands in readiness to the picked up by a next platform carrier 9.

Hereafter the cycle is completed.

The unloading operation of the pallets in the unloading area is effected in a similar way. Herein there should only be taking account of the height of the load on the pallet when the conveyor belts are started, because the platform carrier having the empty platform thereon should be lifted up such a distance that the next platform loaded with a full pallet is able to move under it.

The invention is not restricted to the embodiment shown in a drawing by way of example, which can be varied in different ways within the scope of the invention.

**Claims**

1. Platform conveyor comprising at least one pair of substantially parallel continuously driven endless chains or the like guided around pairs of aligned guide disks, a number of platform carriers fixed to the pairs of chains in a spaced apart relationship, and platforms carried by the platform carriers, the chains, in operation, guiding the platforms in a substantially horizontal position from a loading area to an unloading area through a transport part and back through a return part by means of the platform carriers, **characterized** in that the platforms are adapted to be uncoupled temporarily with respect to the chains in each loading and unloading area, whereby the platforms are permitted to be loaded and unloaded respectively in their uncoupled condition.

2. Platform conveyor according to claim 1, **characterized** in that the platforms are connected to the platform carriers in a detachable manner, and at least a number of platforms corresponding to the number of loading and unloading areas added to the number of platform carriers is provided, wherein the platform carriers are adapted to deliver a platform and to pick up a further platform in each loading and unloading area.

3. Platform conveyor according to claim 2, **characterized** in that the chains comprise a substantially horizontal section in each loading and unloading area, the platform carriers being brought from the delivered platform to the platform to be picked up, upon passing through said section.

4. Platform conveyor according to claim 3, **characterized** in that in each loading and unloading area substantially vertical sections connect to said substantially horizontal section, the platform carriers being able to be uncoupled from one of the platforms or to be coupled to one of the platforms respectively during the transition between the substantially vertical movement and the substantially horizontal movement or reverse, respectively.

5. Platform conveyor according to one of the preceding claims, **characterized** in that the supporting surface of each platform is constructed as a conveyor for loading and unloading goods to and from the platform.

6. Platform conveyor according to claim 5, **characterized** in that each platform comprises a frame, in which a plurality of rollers are journalled, the rollers extending parallel in a single plane, and a conveyor belt being guided around said plurality of rollers and serving as conveyor.

7. Platform conveyor according to claim 6, **characterized** in that the direction of movement of the supporting surface of the conveyor belt of each platform is directed substantially perpendicular to the direction of movement of the platforms in the platform conveyor.

8. Platform conveyor according to claims 5, 6 or 7, **characterized** in that in each loading and unloading area a driving means is able to engage the conveyor of the respective platform and to drive it for loading and unloading goods.

9. Platform conveyor according to claim 8, **characterized** in that said driving means comprises a drive belt guided over driven rollers and adapted to engage the lower part of the conveyor belt of the platform.

10. Platform conveyor according to one of the claims 3-9, **characterized** in that in each loading and unloading area there is provided a conveying means extending from the delivery point for the platforms to the pick up point for the platforms and adapted to convey the platforms from the delivery point to the pick up point.

11. Platform conveyor according to claim 10, **characterized** in that each conveying means comprises two conveyor belts extending parallel to the direction of movement of the platform carriers in situ and guided over driven rollers, the conveyor belts being able to support the platforms.

12. Platform conveyor according to one of the preceding claims, **characterized** in that in each loading and unloading area there is provided at least one loading and unloading conveyor belt to which the platform delivered in the loading and unloading area is connectable.

13. Platform conveyor according to claim 12, **characterized** in that each loading and unloading conveyor belt of the loading and unloading areas connect to the pick up point for the platforms.

14. Platform conveyor according to claim 12 or 13, **characterized** in that in each loading and unloading area there are provided two loading and unloading conveyor belts.

15. Platform conveyor according to claims 2-14, **characterized** in that the engagement of each platform carrier with one of the platforms takes place by means of hooks fixed to the platform carrier and engaging from below into respective eyes fastened to the platform.

16. Platform conveyor according to one of the claims 3-15, **characterized** in that in each loading and unloading area there is provided a guiding means for the platform carriers guiding the platform carriers at the lower side during their passage through the respective horizontal section.

17. Platform conveyor according to claim 16, **characterized** in that the guiding means includes an endless conveying means such as a auxiliary chain, of which the transport part extends parallel to the horizontal section of the claims in situ and, in operation, has the same speed of circulation as the chains for the platform carriers, the endless conveying means comprising elements onto which cooperating elements of the platform carriers are able to engage.

18. Platform conveyor according to claim 17, **characterized** in that said endless conveying means comprises an auxiliary chain carrying a plurality of longitudinally equally spaced apart transverse pins adapted to be engaged by locking claws fixed to the platforms.

19. Platform conveyor according to claim 18, **characterized** in that the driving of the endless conveying means is branched off from the movement of circulation of one of the chains.

20. Platform conveyor according to claim 19, **characterized** in that each locking claw of each platform carrier is shaped such that it comes gradually into engagement with one of the transverse pins of the endless conveying means, the engagement already starting at the beginning of the transition of the vertical movement of the platform carrier to the horizontal one; and vice versa.

fig.1

fig.2

fig.4

fig.3

0 287 135

fig.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-B-1 089 204 (WOUDSTRA) <br> * column 3, line 22 - column 4, line 4; figures 2,3 * | 1,2 | B 65 G 17/16 <br> B 65 G 67/60 |
| A | GB-A-2 140 371 (CANZIANI) <br> * page 1, lines 94 - 109; figures 3-5 * | 1,5,7 | |
| A | US-A-4 039 090 (DESOURDY) <br> * column 1, line 48 - column 2, line 3; column 3, lines 24-37; figures 1,2 * | 1-4,10 | |
| D,A | NL-A-6 400 015 (MIAG) <br> * figures 1-5 * | 1 | |

TECHNICAL FIELDS SEARCHED (Int. Cl.4)

B 63 B 27/00
B 65 G 17/00
B 65 G 67/00

The present search report has been drawn up for all claims

| Place of search | Date of completion of the search | Examiner |
|---|---|---|
| BERLIN | 15-06-1988 | SIMON J J P |

EPO FORM 1503 03.82 (P0401)